# EUROPÄISCHE PATENTSCHRIFT

(11) **EP 1 838 473 B1**
(45) Veröffentlichungstag und Bekanntmachung des Hinweises auf die Patenterteilung: **06.04.2011**
(21) Anmeldenummer: 06700203.0
(22) Anmeldetag: 14.01.2006
(51) Int. Cl.: B21D 51/26, B65D 83/14, B21C 37/08, B23D 21/04, B26D 3/16

(54) **VERFAHREN UND VORRICHTUNG ZUM HERSTELLEN VON MANTELABSCHNITTEN**
METHOD AND DEVICE FOR PRODUCING PERIPHERAL SEGMENTS
PROCEDE ET DISPOSITIF POUR PRODUIRE DES SECTIONS TUBULAIRES

(30) Priorität: 14.01.2005 WO PCT/CH2005/000016
(43) Veröffentlichungstag der Anmeldung: 03.10.2007
(73) Patentinhaber: CREBOCAN AG, 9606 Bütschwil (CH)
(72) Erfinder: BOLTSHAUSER, Werner, CH-9606 Bütschwil (CH)
(74) Vertreter: Büchel, von Révy & Partner
(86) Internationale Anmeldenummer: PCT/CH2006/000031
(87) Internationale Veröffentlichungsnummer: WO 2006/074570

(56) Entgegenhaltungen:
- WO-A-2005/000498
- DE-A1- 1 452 556
- FR-A- 1 599 934
- GB-A- 878 713

## Beschreibung

Die Erfindung bezieht sich auf ein Verfahren nach dem Oberbegriff des Anspruches 1 und auf eine Vorrichtung nach dem Oberbegriff des Anspruches 8.

Beim Herstellen von metallischen Teilen mit einem in Umfangsrichtung geschlossenen Mantel kann ein flaches Bandmaterial kontinuierlich in die geschlossene Form umgeformt werden. Dazu werden die beiden seitlichen Ränder um eine Längsachse zusammengeführt und durch eine Schweissnaht miteinander verbunden. Vom entstehenden Rohrstück werden die gewünschten Mantelabschnitte abgetrennt. Die Mantelabschnitte können als Rohrteile verwendet oder zu den gewünschten Teilen weiterbearbeitet werden.

Stark verbreitet sind Dosen aus Stahlblech, bei denen der Mantel eine Längs-Schweissnaht aufweist. Der Boden und/oder der obere Abschluss sind am Dosenmantel befestigt. Aus der WO2005/000498 A1 sind Ausführungsformen von Dosenkörpern bekannt, bei denen der Dosenmantel aus einem flachen Bandmaterial hergestellt wird. Ein Boden oder ein oberer Abschlussteil wird mittels Laserschweissen mit dem Dosenmantel verbunden.

Unter Dosenkörpern sollen alle Gefässe, insbesondere Aerosoldosen, Getränkedosen aber auch Tuben und gefässförmige Zwischenprodukte verstanden werden.

Bei einer bekannten Ausführungsform wird die Dosenlängsnaht, mit der der Dosenmantel geschlossen wird, als gestossene Naht ausgebildet. Dabei werden beide miteinander zu verbindenden seitlichen Randbereiche auf je einer Führungsteilfläche geführt, wobei die Führungsteilflächen aufeinander ausgerichtet sind und sich entlang der Längsnaht erstrecken. Damit auch die Stirnseiten dünner Randbereiche exakt aufeinander treffen, werden beide Randbereiche gegen die Führungsteilflächen gehalten. Indem mindestens ein Randbereich an der Führungsteilfläche zum Anschlag am anderen Randbereich bewegt wird, kann ein exaktes Zusammentreffen der Stirnflächen beider Randbereiche gewährleistet werden. Am gegenseitigen Anschlag kann der Schweissvorgang durchgeführt werden.

Um auf das Anordnen von Führungsflächen der Bearbeitungsvorrichtung im Innern des Dosenmantels zu verzichten, werden vorzugsweise Teilflächen der Innenseite des Dosenmantels als Führungsteilflächen verwendet. Das Schweissen der Längsnaht wird somit an einem flachgedrückten Dosenmantel durchgeführt. Im Bereich der zu schweissenden Naht ist zwischen den beiden Führungsteilflächen eine von den zu verbindenden Randbereichen wegführende Vertiefung, bzw. ein vom Mantel nach aussen stehender Bereich ausgebildet, so dass beim Schweissvorgang eine Verbindung mit den Führungsteilflächen vermieden wird. Die aneinander anliegenden ebenen Teilflächen sind über Krümmungsbereiche miteinander verbunden.

Damit beim Aufweiten des flach gedrückten Dosenmantels in radialer Richtung am Dosenmantel keine Risse oder unerwünschte Wülste entstehen, wird im flach gedrückten Zustand eine Form mit kleinen Krümmungsradien aber ohne Falten gewählt. Zwischen den beiden Krümmungsbereichen ist der Dosenmantel im Wesentlichen flachgedrückt, so dass beim Schweissen durch ein gezieltes Pressen in zumindest einem Krümmungsbereich das Zusammenpressen der Stirnflächen einfach gewährleistet werden kann.

Zur Ausbildung der Naht können verschiedene Schweissverfahren eingesetzt werden. Vorzugsweise aber wird die Naht mittels Laserschweissen hergestellt. Das Flachmaterial muss somit zumindest eine metallische Laser schweissbare Schicht umfassen. Meist werden Stahlbleche verwendet, welche gute Verformungseigenschaften haben und günstig mit der gewünschten Dicke bezogen werden können.

Zum Abtrennen der Dosenmantelabschnitte vom Bandmaterial wird gegebenenfalls ein Sägeverfahren eingesetzt. Dabei wird ein Trennmittel, wie eine Trennscheibe oder ein Sägeband, während des Sägevorganges mit dem entstehenden Rohr mitgeführt. Nach dem Abtrennen eines Rohrabschnittes wird das Trennmittel zurückgestellt. Aufgrund der kurzen Abschnitte bzw. der kleinen Dosenhöhen sind die bekannten Trennvorrichtungen mit Nachteilen behaftet, weil sie nicht schnell trennen und rückstellen können. Ein weiterer Nachteil der bekannten Trennvorrichtungen besteht darin, dass beim Trennen besonders dünnwandiger Rohre die Gefahr der Verformung und damit des Verklemmens besteht. Zudem entstehen bei den bekannten Trennverfahren Sägespäne, welche zusätzliche Reinigungsschritte notwendig machen würden und/oder bei den weiteren Dosenherstellungsschritten Probleme machen könnten.

Gemäss der WO2005/000498 A1 und der DE 1 452 556 kann ein schnelles und sauberes Abtrennen gewährleistet werden, wenn das flach gedrückte Dosenmantel-Bandmaterial mit am flachen Bandmaterial vorgeschnittenen Krümmungsbereichen auf einer Unterlage geführt wird, die mit einer Schneidkante zusammenwirken kann. Sobald die gewünschte Länge des Rohrabschnittes vorgeschoben ist, wird die Schneidkante schneidend durch die aneinander anliegenden Wandbereiche des Rohres durch bewegt. Der Nachteil dieser Abtrennlösung besteht darin, dass vor dem Schweissen der Längsnaht ein Vorschneiden und nach dem Schweissen exakt auf die vorgeschnittenen Schnitte ausgerichtet das Abtrennen durchgeführt werden muss.

FR 1 599 934 beschreibt das Herstellen von Rohrabschnitten aus Bandmaterial mit einer Formeinrichtung, einer Verbindungseinrichtung und einem drehenden Messer. Das Bandmaterial wird mit kreisförmigem Querschnitt durch die Verbindungsvorrichtung geführt. Für das Verbinden des umgeformten Bandes zu einem geschlossenen Rohr sind ein Kleber und ein Kunststofflösungsmittel beschrieben. Zum Schneiden am kontinuierlich vorgeschobenen Rohr wird im Innern ein zylindrischer Dom und aussen ein drehendes Messer mit dem Rohr mitbewegt. Der Dom umfasst eine dem Messer zugeordnete ringförmige Vertiefung und steht in das abgeschnittene Rohrstück vor. Eine drehende äussere Hülse ist mit dem Messer und mit einer nicht drehenden inneren Hülse verbunden. Um die innere Hülse während des Schneidvorgangs am Rohr zu halten wird die Kammer zwischen den beiden Hülsen mit Unterdruck beaufschlagt. Diese Lösung ist bei äusserst kurzen Schneidzyklen bzw. bei hohen Drehzahlen des Messers nicht geeignet, weil der zum Halten und Loslassen nötige Druckabbau und -aufbau nicht genügend schnell erfolgen kann.

Der vorliegenden Erfindung liegt die Aufgabe zugrunde, eine Lösung zu finden mit der eine dichte Längsschweissnaht sowie ein schnelles und verformungsfreies Abtrennen ohne Vorschnitte durchgeführt werden kann.

Diese Aufgabe wird durch die Merkmale des Anspruches 1 bzw. 7 gelöst. Die abhängigen Ansprüche beschreiben bevorzugte bzw. alternative Ausführungsformen.

Bei der Suche nach einem alternativen Schneidvorgang zum Abtrennen von Dosenmänteln vom kontinuierlich mittels einer Längsschweissnaht hergestellten Wandmaterial wurde eine Lösung gefunden, die auch unabhängig von der Dosenherstellung neu und erfinderisch ist. Bei dieser Lösung wird im Innern des kontinuierlich gebildeten Dosenmantel-Bandes bzw. des Wandmaterials eine Stützkante bereitgestellt. Die Stützkante ist im Wesentlichen kreisförmig geschlossen, verläuft in einer Normalebene zur Längsachse des Wandmaterials und liegt direkt an der Innenseite des Wandmaterials an. Dieser Stützkante ist mindestens ein Schneidwerkzeug; vorzugsweise ein Schneidring, zugeordnet, welche Werkzeuge beim Schneiden entlang der Stützkante gedreht werden, so dass sich mindestens ein Schneidbereich einmal um das Wandmaterial dreht und dabei einen Abschnitt des Wandmaterials abtrennt. Während des Schneidvorganges bewegen sich die Stützkante und der Schneidring bzw. die Schneidelemente mit dem Wandmaterial mit. Nach dem Schneidvorgang wird der Schneidring, bzw. werden die Schneidelemente, in eine konzentrische, berührungsfreie Lage zur Stützkante bewegt und in Richtung der Längsachse gegen die Bewegung des Wandmaterials zurück zur Ausgangslage vor dem Schneidvorgang gebracht um anschliessend einen weiteren Schneidvorgang durchzuführen. Für diesen Schneid- und Rückstellvorgang kann der Schneidring kontinuierlich gedreht werden. Der Schneidring muss im richtigen Takt von der konzentrischen in die exzentrische Lage verstellt werden.

Bei dieser neuen Schneidlösung kann auf vorgängig ins Bandmaterial eingebrachte Einschnitte verzichtet werden. Sie ermöglicht auch bei äusserst dünnem Flachmaterial ein schnelles und verformungsfreies Abtrennen.

Wenn das Wandmaterial beim Schweissen der Längsnaht flach gedrückt ist, muss zwischen der Schweissvorrichtung und der Stützkante im Innern des Wandmaterials ein Aufweitungselement angeordnet sein, welches das flachgedrückte Wandmaterial in den kreisförmigen Querschnitt der Stützkante umformt. Das Aufweitungselement kann an zwei Haltestangen, die in den seitlichen Krümmungsbereichen des flachgedrückten Wandmaterials geführt sind, befestigt werden. Diese beiden Haltestangen erstrecken sich vom Aufweitungselement bis in einen Bereich, in dem das Wandmaterial noch nicht geschlossen ist und die Stangen somit mit Halteteilen ausserhalb des Wandmaterials verbindbar sind. Die Stützkante ist in Längsrichtung bewegbar beispielsweise am Aufweitungselement gelagert, wobei die Bewegung der Stützkante mit der Längsbewegung des Schneidringes gekoppelt ist.

Die Stützkante kann auch von der vom Aufweitungselement abgewandten Seite her gehalten und bewegt werden. Dazu muss sie von der offenen Seite her entgegen der Vorschubrichtung des Mantel-Bandes in den abzutrennenden Mantelabschnitt eingeführt werden. Beim Schneidvorgang soll die Stützkante in einer mit der Position des Schneidwerkzeuges koordinierten Lage innen am Wandmaterial anliegen. Damit die Schneidkante nicht bereits beim Einführen am Wandmaterial anliegen muss, kann diese radial ausdehnbar ausgebildet werden, beispielsweise mit radial verstellbaren Spreizteilen, die je einen Abschnitt der Stützkante bilden. Zum Einführen wird der Umfang verkleinert und zum Schneiden vergrössert. Nach dem Abtrennen eines Mantelabschnittes kann der Umfang wieder verkleinert und der Mantelabschnitt seitlich oder vertikal versetzt zum entstehenden Mantel-Band von der Stützkante abgegeben werden. Die Stützkante wird dann zum Abtrennen des nächsten Mantelabschnittes in das in der Zwischenzeit bereits weiter vorgerückte rohrförmige Mantel-Band eingeführt.

Die Stützkante kann von einem Kolbenteil der Vorrichtung zum Abtrennen der Rohrabschnitte bewegt werden. Der Kolbenteil muss die Bewegungen der Stützkante so schnell durchführen, dass die während des Abtrennens eines Abschnittes entstehende Rohrlänge nicht grösser ist als die Länge der abzutrennenden Abschnitte. Gegebenenfalls werden mindestens zwei Stützkanten vorgesehen, so dass während der Abgabe eines abgetrennten Mantelabschnittes von der ersten Stützkante die zweite Stützkante bereits wieder eingeführt werden kann, was zu einem kürzeren Abtrennzyklus führt. Wenn lediglich die Mantelabschnitte weitergegeben werden, gehören die Stützkanten zum Kolbenteil. Ein Wechsel des auf das entstehende Rohr ausgerichteten Kolbenteiles bzw. der Stützkante kann durch ein Verschieben der Kolbenteile quer zur Rohrachse oder durch ein Drehen der Kolbenteile um eine Drehachse quer zur Rohrachse erzielt werden. Der Wechsel zwischen zwei Kolbenteilen kann durch zwei Bewegungen in entgegen gesetzten Richtungen erzielt werden. Bei einer Drehlösung kann die Drehung auch immer in der gleichen Drehrichtung erfolgen.

Wenn die Mantelabschnitte bei der anschliessenden Bearbeitung auf einem Dorn gehalten werden, ist es zweckmässig, dass sie bereits beim Abtrennen auf einen zylindrischen Träger gelangen, mit dem sie der weiteren Bearbeitung zugeführt werden. Für den Abtrennschritt müssen diese Träger eine Stützkante umfassen. Zudem müssen sie eine lösbare Verbindung zum Kolbenteil ermöglichen. Das Fördern und Bearbeiten der Mantelabschnitte wird durch die Trägern deutlich vereinfacht. Die Träger umfassen an einer ersten Stirnseite die Stützkante, an einer zweiten Stirnseite eine Verbindungseinrichtung zum lösbaren Verbinden mit dem Kolbenteil und dazwischen eine zylindrische Trägerfläche zum Tragen eines Mantelabschnittes. Wenn an der zweiten Stirnseite 303 des Trägers 301 magnetisches oder von sich aus nicht magnetisches aber magnetisierbares Material angeordnet ist, so kann das Halten am Kolbenteil und an einer Fördereinrichtung mit einem Elektromagneten erzielt werden.

Die beschriebene Lösung ist bei der Herstellung von Dosenkörpern besonders vorteilhaft, weil die Stirnseiten des Mantelabschnittes durch das Abtrennen nicht beeinträchtigt sind und das Abtrennen sehr schnell erfolgt. Bei Dosen wird besonders dünnes Bandmaterial verwendet, welches durch die verwendete Stützkante vor einer unerwünschten Verformung durch das Schneidwerkzeug geschützt ist. Auf eine zusätzliche Bearbeitung der Stirnseiten kann verzichtet werden. Das Verbinden der Stirnseiten mit Abschlusselementen wie Dosenböden, Ventilsitzen oder Ventilteilen ist problemlos möglich und führt mit kleinem Aufwand zu ästhetisch ansprechenden Dosenkörpern. Weil bei der Dosenherstellung Produktionsdurchsätze von 300 bis 600 Dosen pro Minute gängig sind, ist das vom beschriebenen Verfahren gewährleistete schnelle Abtrennen der Dosenmäntel sehr wichtig.

Wenn das Bandmaterial mit einer Dekorfolie und/oder einer Innenfolie versehen ist, so kann die Folie beim Abtrennen der Mantelabschnitte direkt zusammen mit dem stabilitätsgebenden Teil des Mantels abgetrennt werden. Dadurch kann auf ein separates Abtrennen von dünnen Folienstücken verzichtet werden.

Die Zeichnungen erläutern die erfindungsgemässe Lösung anhand zweier Ausführungsbeispiele. Dabei zeigt
- Fig. 1: eine perspektivische Darstellung des Dosenmantel-Bandes beim Aufweiten und Abtrennen von Dosenmänteln,
- Fig. 2: eine stirnseitige Ansicht des Dosenmantel-Bandes beim Schliessen, Schweissen und Aufweiten,
- Fig. 3: eine perspektivische Ansicht eines Aufweitungselementes zum Aufweiten des Dosenmantel-Bandes,
- Fig. 4 und 5: Längsschnitte durch eine Schneideinrichtung zum Abtrennen von Dosenmänteln,
- Fig. 6: eine schematische Darstellung einer Zuführung von zylindrischen Träger,
- Fig. 7: eine schematische Darstellung des Schneidvorgangs unter Verwendung von zylindrischen Träger, und
- Fig. 8: und 9 schematische Darstellungen einer Zuführung von zylindrischen Trägern

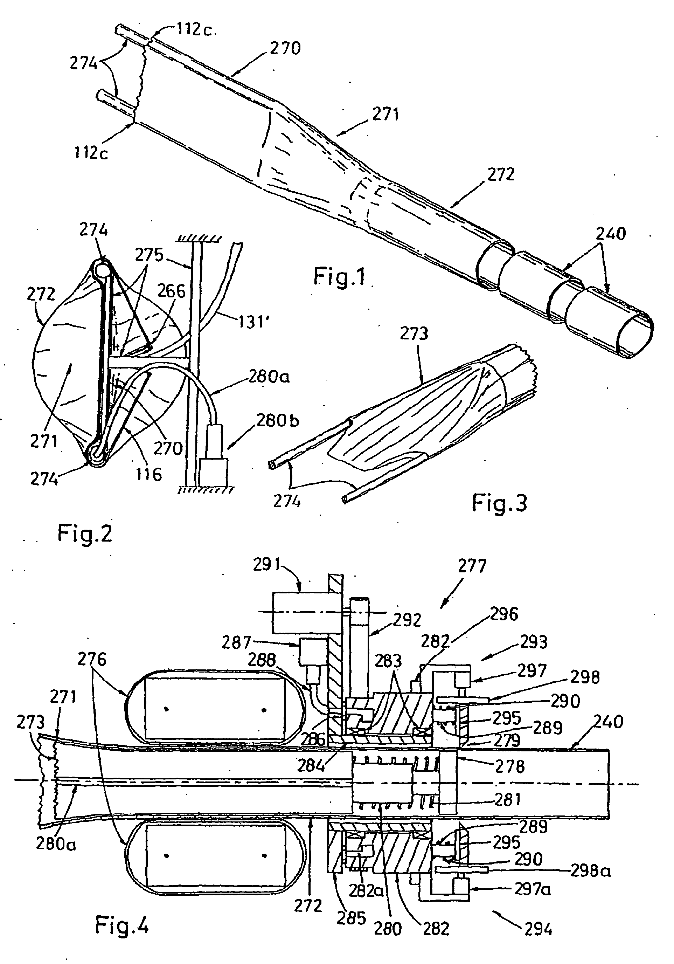

Die Fig. 1 bis 4 beschreiben eine Lösung zum Abtrennen von Mantelabschnitten 240, die auch unabhängig von der Dosenherstellung neu und erfinderisch ist.

Fig. 1 zeigt schematisch, wie ein flach gedrücktes Dosenmantel-Band 270 in einem Aufweitungsbereich 271 mit einem Aufweitungselement 273 im Innern des Dosenmantel-Bandes in ein im Querschnitt kreisförmiges Dosenmantel-Band 272 umgeformt wird. Vom kreisförmigen Dosenmantel-Band 272 werden Dosenmäntel 240 abgetrennt.

Das Aufweitungselement 273 wird von Haltestangen 274 gehalten, welche in den beiden Krümmungsbereichen 112c des flachgedrückten Dosenmantel-Bandes 270 geführt sind und sich gemäss Fig. 2 vom Aufweitungselement 273 bis zu einer Halterung 275 in einem Bereich erstrecken, in dem das bandförmige Flachmaterial 116 noch nicht geschlossen ist. Am Flachmaterial 116 ist gegebenenfalls eine Dichtungswulst 266 angeordnet. Das Flachmaterial wird mit nicht dargestellten Rollen in die flachgedrückte geschlossene Form umgeformt und mit dem durch eine Laserzuführung 131' geführten Laserstrahl geschweisst. Anschliessend wird gegebenenfalls die Dichtungswulst 266 mittels eines Schmelzvorganges auf die Innenseite der Längsnaht 124 gebracht. Dann gelangt das Dosenmantel-Band 272 in den Aufweitungsbereich 271 und erhält schliesslich den kreisförmigen Querschnitt.

Fig. 4 zeigt eine Vorrichtung zum Abtrennen der Dosenmäntel 240. Förderelemente 276 liegen reibungsschlüssig am Dosenmantel-Band vorzugsweise am kreisförmigen Dosenmantel-Band 272 an und ziehen das Dosenmantel-Band 272 durch den Aufweitungsbereich 271. Die Abtrennvorrichtung 277 umfasst eine Stützkante 278, welche im Wesentlichen kreisförmig geschlossen ist, in einer Normalebene zur Längsachse des Dosenmantel-Bandes 272 verläuft, direkt an der Innenseite des Dosenmantel-Bandes 272 anliegt und mit mindestens einem Schneidwerkzeug 279, vorzugsweise einem Schneidring, zusammenwirkt. Der Schneidring 279 wird beim Schneiden exzentrisch zur Stützkante 278 gedreht, so dass sich ein Schneidbereich einmal um die Längsachse dreht und dabei einen Abschnitt des Dosenmantel-Bandes 272 abtrennt. Während des Schneidvorganges werden die Stützkante 278 und der Schneidring 279 mit dem Dosenmantel-Band 272 vorgeschoben und nach dem Schneidvorgang wird der Schneidring 279 in eine konzentrische Lage zur Stützkante 278 gebracht und mit der Stützkante 278 gegen die Bewegung des Dosenmantel-Bandes 272 zurück zur Ausgangslage vor dem Schneidvorgang gebracht.

Die Stützkante 278 ist in der dargestellten Ausführungsform am Aufweitungselement 273 gelagert. Um die Vor- und Rückwärtsbewegung kontrolliert durchzuführen, wird zwischen dem Aufweitungselement 273 und der Stützkante 278 beispielsweise eine Kolben-Zylinder-Einheit 280 und gegebenenfalls eine Rückstellfeder 281 angeordnet. Die Kolben-Zylinder-Einheit 280 wird von einem Druckfluid betätigt, wobei dazu eine Antriebseinrichtung 280b (Fig. 2) über eine Zuführleitung 280a mit der Kolben-Zylinder-Einheit 280 verbunden ist. Es versteht sich von selbst, dass auch eine andere aus dem Stande der Technik bekannte Stelleinrichtung, insbesondere eine elektrisch angetriebene, verwendet werden kann.

Der Schneidring 279 ist an einem Drehteil 282 in Achsrichtung beweglich gelagert. Der Drehteil 282 wiederum ist mittels Drehlagern 283 drehbar an einem Tragrohr 284 angeordnet, welches in Achsrichtung von einer Halteplatte 285 vorsteht. Zwischen der Halteplatte 285 und dem Drehteil 282 ist beispielsweise eine Dreheinführung 286 für ein Druckfluid vorgesehen. Das Druckfluid wird von einer Antriebseinrichtung 287 über eine Zuführleitung 288, die Dreheinführung 286 und einen Ringkanal 282a zu Kolben-Zylinder-Einheiten 289 geführt, welche am Drehteil 282 befestigt sind und den Schneidring 279 in Richtung der Längsachse bewegbar machen. Für die kontrollierte Vor- und Rückwärtsbewegung des Schneidringes 279 wird den Kolben-Zylinder-Einheiten 289 je eine Rückstellfeder 290 zugeordnet. Es versteht sich von selbst, dass auch eine andere aus dem Stande der Technik bekannte Stelleinrichtung, insbesondere eine elektrisch angetriebene, verwendet werden kann.

Für den Schneidvorgang muss der Schneidring 279 in Drehung sein und relativ zum Drehteil 282 in eine exzentrische Stellung gebracht werden. Ein Drehantrieb 291 hält den Drehteil 282 über eine Antriebsübertragung 292, vorzugsweise einen auf Rollflächen laufenden Riemen, in Drehung. Der Wechsel von der zentrischen zur exzentrischen Lage des Schneidringes 279 wird beispielsweise über zwei Stellvorrichtungen 293, 294 erzielt. Die erste Stellvorrichtung 293 drückt den Schneidring 279 in die exzentrische Lage bzw. die Schneidlage und die zweite Stellvorrichtung 294 drückt den Schneidring 279 in die zentrische Lage bei der der Schneidring 279 nicht mit dem Dosenmantel-Band 272 in Kontakt ist. Damit der Schneidring 279 in diese beiden Lagen bewegbar ist, wird der Schneidring 279 über Geradführungen 295, die eine Bewegung quer zur Längsachse ermöglichen, an den Kolben-Zylinder-Einheiten 289 befestigt.

Während des Vorschubes, bzw. der Bewegung des Schneidringes 279 vom Drehteil 282 weg, muss der Schneidring 279 in der exzentrischen Lage sein. Während der Rückstellung und bei fehlender Bewegung in Längsrichtung, muss der Schneidring 279 im Wesentlichen zentrisch liegen. Während des Vorschubes führt die Antriebseinrichtung 287 Druckfluid mit zunehmendem Druck zu den Kolben-Zylinder-Einheiten 289. Ein erstes Kontrollventil 296 ist am Ringkanal 282a angeschlossen und so ausgebildet, dass bei zunehmendem Druck ein erster Stellzylinder 297 den Schneidring 279 mit einer ersten Betätigungsfläche 298 in die Schneidlage bringt. Während der Rückstellung und bei fehlender Bewegung in Längsrichtung nimmt der Druck im Ringkanal 282a ab, bzw. bleibt konstant, und das erste Kontrollventil 296 baut den Betätigungsdruck im erster Stellzylinder 297 soweit ab, dass ein zweiter Stellzylinder 297a aufgrund einer Vorspannung (Druckakkumulator, Feder) den Schneidring 279 mit einer zweiten Betätigungsfläche 298a in die zentrische Lage drückt.

Es versteht sich von selbst, dass für die Betätigung des ersten Stellzylinders 298 auch eine eigene Antriebseinrichtung mit Fluidzuführung vorgesehen werden kann. Anstelle eines Schneidringes 279 kann ein Schneidwerkzeug oder es können auch mehrerere Schneidwerkzeuge vorgesehen werden, wobei die Schneidwerkzeuge analog zum Schneidring 279 in die Schneidlage und in die kontaktfreie Lage gebracht werden. Wenn mehrere Schneidwerkzeuge am Umfang verteilt angeordnet sind, so kann bereits mit weniger als einer Drehung des Drehteiles 282 ein Dosenmantel 240 abgetrennt werden.

Die Vorschublänge während des Abtrennens hängt von der Vorschubgeschwindigkeit der Dosenmantel-Herstellung und von der Drehzahl des Drehteiles 282 ab. Beim Abtrennen mit einem Schneidring 279 und einer Vorschubgeschwindigkeit von 1m/sec sowie einer Drehzahl von 3000 Umdrehungen pro Minute beträgt die Vorschublänge 20mm. Mit der Verdoppelung der Drehzahl oder dem Einsatz von zwei gleichzeitig schneidenden Werkzeugen kann die Vorschublänge halbiert werden.

Die beschriebene Schneidvorrichtung kann generell eingesetzt werden zum Abtrennen von dünnwandigen Mantel- bzw. Rohrabschnitten, insbesondere zum Abtrennen von Dosenmänteln. Wenn die Längsschweissnaht an einem quer zur Längsachse umgeformten Flachmaterial mit kreisförmigem Querschnitt ausgebildet wird, so kann auf das Aufweiten in die kreisförmige Form verzichtet werden. Die beschriebene Vorrichtung zum Herstellen von Mantelstücken umfasst eine Umformvorrichtung, die bandförmiges Flachmaterial 116 quer zur Bandachse kontinuierlich in eine geschlossene Form umformt, eine Schweissvorrichtung, welche eine Längsnaht schweisst, und eine Abtrennvorrichtung gemäss Fig. 4, welche Dosenmantelabschnitte 112 abtrennt.

Im Innern des kontinuierlich gebildeten Dosenmantel-Bandes 272 ist eine von der Umformvorrichtung her gehaltene Stützkante 278 angeordnet, welche im Wesentlichen kreisförmig geschlossen ist, in einer Normalebene zur Längsachse des Dosenmantel-Bandes 272 verläuft, direkt an der Innenseite des Dosenmantel-Bandes 272 anliegt und mit mindestens einem Schneidwerkzeug 279 zusammenwirkt. Das Schneidwerkzeug 279 ist zum Schneiden in Schneidstellung zur Stützkante 278 drehbar, so dass sich ein Schneidbereich einmal um die Längsachse dreht und dabei einen Abschnitt des Dosenmantel-Bandes 272 abtrennt. Während des Schneidvorganges ist die Stützkante 278 und das mindestens eine Schneidwerkzeug 279 mit dem Dosenmantel-Band 272 vorschiebbar und nach dem Schneidvorgang ist das mindestens eine Schneidwerkzeug 279 in eine kontaktfreie Lage und mit der Stützkante 278 gegen die Bewegung des Dosenmantel-Bandes 272 zurück zur Ausgangslage vor dem Schneidvorgang bewegbar. Es versteht sich von selbst, dass anstelle des Schneidringes auch ein anderes Schneidwerkzeug eingesetzt werden kann.

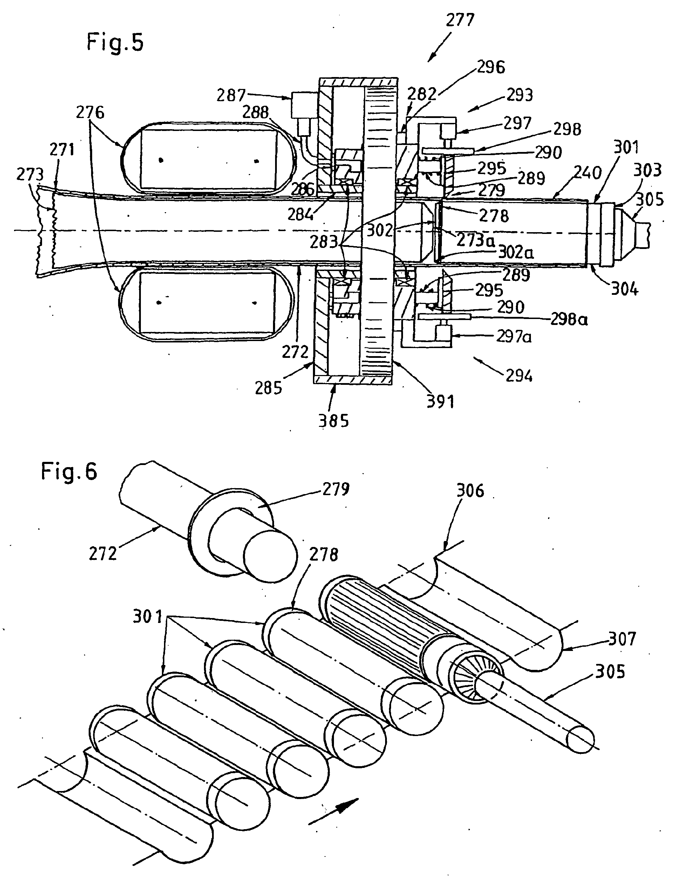

Fig. 5 zeigt eine zweite Vorrichtung zum Abtrennen der Dosenmäntel 240. Die Förderelemente 276 und das Schneidwerkzeug 279 sind im Wesentlichen gleich ausgebildet, wie bei der Ausführungsform gemäss Fig. 4. Anstelle des Drehantriebs 291 und der Antriebsübertragung 292 wird ein ringförmiger Drehmotor 391 direkt um den Drehteil 282 angeordnet. Die äussere Umfangsfläche des Drehmotors 391 wird beispielsweise von einer Haltehülse 385 oder einem anderen Halteteil gehalten. Die radial innere Anschlussfläche des Drehmotors 391 ist kraftschlüssig mit dem Drehteil 282 verbunden. Wenn der Drehmotor 391 eingeschaltet ist, dreht sich der Drehteil 282 mit der gewünschten Drehzahl. Aufgrund der gewünschten hohen Drehzahl wird der Drehmotor 391 vorzugsweise als Elektromotor ausgebildet.

Wenn der Drehmotor 391 am äusseren, festen Teil Wicklungen und am Drehteil 282 Permanentmagneten umfasst, so braucht er keine eigene Drehlagerung und die elektrischen Anschlüsse benötigen keine Drehzuführung. Die Drehlagerung wird von den Drehlagern 283 gewährleistet und der Drehmotor 391 ist direkt am Drehteil 282 und der der Haltehülse 385 aufgebaut. Es versteht sich von selbst, dass Permanentmagnete auch an der Haltehülse 385 und Wicklungen am Drehteil angeordnet sein können, wobei die Wicklungen dann über eine Drehzuführung gespeist werden. Es kann also jede Art von Elektromotor zwischen der Haltehülse 385 und dem Drehteil 282 aufgebaut werden.

Der Wechsel von der zentrischen zur exzentrischen Lage des Schneidringes 279 wird über die Stellvorrichtungen 293, 294 erzielt. Die Bewegungen des Schneidringes 279 in Richtung der Längsachse des Mantel-Bandes 272 werden analog durchgeführt, wie in der Ausführungsform gemäss Fig. 4. Es versteht sich von selbst, dass für diese beiden Bewegungen auch andere Betätigungslösungen eingesetzt werden können.

Der Schneidring 279 wirkt beim Schneiden mit einer Stützkante 278 zusammen. In der Ausführungsform gemäss Fig. 5 ist die Stützkante 278 an einem zylinderförmigen Träger 301 ausgebildet. Der Träger 301 umfasst eine erste Stirnseite 302 und eine zweite Stirnseite 303 und dazwischen eine zylindrische Trägerfläche 304, welche zum Tragen eines Mantelabschnittes 240 ausgeformt ist. Wenn die Trägerfläche 304 aus elastischem Material gebildet ist, so wird ein Mantelabschnitt 240 durch eine kleine Reibungskraft am Träger 301 gehalten. Trotz dieser Haltekraft kann der Mantelabschnitt 240 über den Träger 301 gestossen und auch von diesem abgezogen werden. Gegebenenfalls ist die Trägerfläche 304 radial wenig bewegbar, so dass das Halten und Freigeben des Mantelabschnittes durch eine Betätigung dieser Bewegung steuerbar ist.

Vor dem Schneidvorgang wird der Träger 301 von der freien Seite her in das Mantel-Band 272 eingeschoben. Das Treffen und Einschieben wird durch eine Verengung 302a an der ersten Stirnseite 302 erleichtert. Zwischen der Verengung 302a und der Trägerfläche 304 ist die Stützkante 278 am Träger 301 ausgebildet, wobei die Schneidkante 279 beim Schneidvorgang gegen die zweite Stirnseite 303 hin hinter der Stützkante 278 eingreift. Die Stützkante liegt von innen an das Mantel-Band 272 an. Gegebenenfalls kann der Umfang der Stützkante 278 wenig erhöht und verkleinert werden, so dass einerseits das Anliegen verbessert und andererseits das Einführen erleichtert wird.

Während des Schneidvorganges werden die Stützkante 278 und der Schneidring 279 mit dem Mantel-Band 272 vorgeschoben. Nach dem Schneidvorgang wird der Schneidring 279 in eine konzentrische Lage zur Stützkante 278 gebracht und gegen die Bewegung des Mantel-Bandes 272 zurück zur Ausgangslage vor dem Schneidvorgang gebracht. Der Träger 301 wird mit dem abgetrennten Mantelabschnitt 240 vom Mantel-Band 272 weg bewegt. Dazu ist ein Betätigungskolben 305 kraftschlüssig mit der zweiten Stirnseite 303 verbunden. Der Träger 301 mit dem Mantelabschnitt 240 wird vom Betätigungskolben 305 an eine Weiterführung übergeben. Anschliessend wird wieder ein leerer Träger 305 vom Betätigungskolben 305 in das Mantel-Band 272 eingeführt.

Der Betätigungskolben 305 ist ein Teil einer nicht dargestellten Betätigungsvorrichtung, die zumindest kontrollierte Vor- und Rückbewegungen des Betätigungskolbens 305 sowie das Verbinden mit dem und das Lösen vom Träger 301 gewährleisten muss. Die lösbare Verbindung zwischen dem Betätigungskolben 305 und der zweiten Stirnseite 303 des Trägers 301 kann mechanisch, mit Unter- und Überdruck oder elektromagnetisch erfolgen. Für eine elektromagnetischen Verbindung wird an der zweiten Stirnseite 303 des Trägers 301 magnetisches oder von sich aus nicht magnetisches aber magnetisierbares Material und am Betätigungskolben ein Elektromagnet angeordnet. Eine zweite Stirnseite 303 mit magnetischem oder magnetisierbarem Material hat den Vorteil, dass der Träger 301 auf Magnetförderern gefördert werden kann und von anschliessenden Bearbeitungsstationen magnetisch gehalten werden kann. Die Träger 301 haben die Funktionalität von Paletten.

Um den Träger 301 genau zu positionieren, kann die erste Stirnseite 302 an eine vordere Anschlagsfläche 273a des Aufweitungselements 273 angelegt werden. In dieser Ausgangsposition ist die Stützkante 278 des Trägers 301 in einer definierten Position, die an die Eingriffsposition des Schneidrings 279 angepasst ist. Beim Schneideingriff wird der Schneidring 279 gegebenenfalls ohne aktive Betätigung vom Vorschub des Mantel-Bandes 272 mitgenommen. Weil beim Schneiden zwischen der Stützkante 278 und dem Mantel-Band 272 ein Kontakt besteht, wird der Träger gegebenenfalls auch reibungsschlüssig vom Vorschub des Mantel-Bandes 272 mitbewegt. Wenn die passive Mitnahme nicht genügt, so wird der Träger 301 vom Betätigungskolben 305 mit dem gewünschten Vorschub bewegt.

Durch die Verwendung von Trägern 301 mit je einer Stützkante 278 kann auf eine vom Aufweitungsteil 273 her getragene und bewegte Stützkante 278 verzichtet werden. Zudem sind die Mantel-Abschnitte 240 bereits auf Trägern 301, was die Weiterbehandlung wesentlich erleichtert. In einer anschliessenden Bearbeitungsstation können die Mantel-Abschnitte 240 auf den Trägern 301 bearbeitet werden oder problemlos an Bearbeitungselemente übergeben werden.

Fig. 6 zeigt schematisch die Zuführung von zylindrischen Trägern 301 zu einem kontinuierlich entstehenden Rohr bzw. einem Mantel-Band 272 von dem mit einem drehenden Schneidwerkzeug 279 Rohr- bzw. Mantelabschnitte 240 abgetrennt werden. Zum dargestellten Zeitpunkt ist ein Träger 301 mit einem abgetrennten Mantelabschnitt 240 in eine Weiterführungs-Position gelangt. Der Betätigungskolben 305 wird nun vom Träger 301 getrennt und die Förderfläche 306 mit den Auflagebereichen 307 wird soweit vorgeschoben, dass ein nachfolgender freier Träger 301 in Achsrichtung direkt vor dem Mantel-Band 272 liegt.

Der Betätigungskolben 305 stösst anschliessend den freien Träger 301 in das das sich nach vorne bewegende offene Ende des Mantel-Bandes 272. Sobald die Abstützkante 278 die Position beim Schneidwerkzeug 279 erreicht hat, wird das Schneidwerkzeug in Schneidposition gebracht. Nach einer Umdrehung des Schneidwerkzeuges 279 ist der Mantelabschnitt 240 abgetrennt und der Träger 301 wird mit dem Mantelabschnitt 240 auf die Förderfläche 306 zurückgelegt.

Bei einem hohen Durchsatz ist es nicht zweckmässig, wenn eine grössere Anzahl von Trägern 301 im "stopp and go" Modus gefördert werden, weil zum Erzielen von kurzen Vorschubzeiten hohe positive und negative Beschleunigungen benötigt werden. Diese Beschleunigungen sind aufgrund der hohen Masse aller Träger 301 und der Förderfläche 306 nur mit sehr grossen Antriebskräften erzielbar.

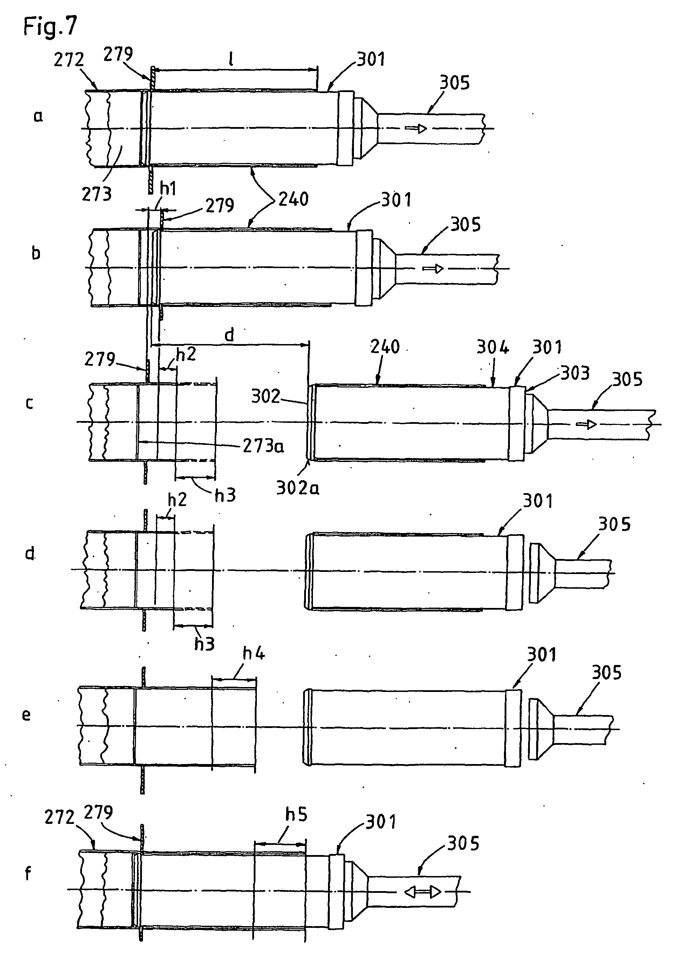

Fig. 7 zeigt das Abtrennen von Mantelabschnitten anhand von Darstellungen, die zeitlich versetzt sind. Ausgehend vom gewünschten Durchsatz ergibt sich eine Produktionszeit pro Mantelabschnitt. Während dieser Produktionszeit müssen die dargestellten Produktionssequenzen durchlaufen werden.

Die Situation a zeigt einen Träger 301 der mit seiner ersten Stirnseite 302 an der vorderen Anschlagsfläche 273a des Aufweitungselements 273 anliegt. Wenn der über das Schneidwerkzeug 279 vorstehende Abschnitt des Mantel-Bandes 272 die Länge I eines gewünschten Dosenabschnittes hat, wird das kontinuierlich drehende Schneidwerkzeug in Schneidposition gebracht, wo es mit der Abstützkante 278 des Trägers 301 zusammenwirkt. Bei einer Drehzahl des Schneidwerkzeuges 279 von 6000 Umdrehungen pro Minute benötigt der Schneidvorgang lediglich 0.01 Sekunden. In dieser Schneidzeit bewegt sich die Schneidlinie, das Schneidwerkzeug 279 und der Träger 301 um einen ersten Hub h1 entlang der Achse des Mantel-Bandes 272, was der Situation b zu entnehmen ist.

Zusätzlich wird für das Rückstellen des Schneidwerkzeuges 279 eine Rückstellzeit von beispielsweise 0.015 s benötigt, in welcher Zeit das Mantel-Band 272 um einen zweiten Hub h2 vorgeschoben wird.

Nach dem Abtrennen des Mantelabschnittes 240 wird durch ein schnelles Wegziehen des Trägers 301 mit dem Mantelabschnitt 240 die Situation c erreicht. Zur Abgabe des beladenen Trägers 301 wird dieser beispielsweise vom Betätigungskolben 305 auf eine Distanz d zum Schneidwerkzeug 279 gebracht. Die Zeit für den Trägerrückzug beträgt beispielsweise 0.03 s. Während dieser Rückzugszeit ist das offene Ende des Mantel-Bandes 272 bereits um einen dritten Hub h3 vorgeschoben.

Die Situationen d und e stellen den Trägerwechsel dar. Dabei wird der Betätigungskolben 305 vom beladenen Träger 301 gelöst, der beladene Träger 301 quer zur Achse des Mantel-Bandes 272 weg bewegt und ein leerer Träger 301 auf diese Achse positioniert. Für den Trägerwechsel wird beispielsweise eine Zeit von 0.033 s vorgesehen. Während dieser Wechselzeit bewegt sich das Mantel-Band 272 um einen vierten Hub h4.

Die Situation f zeigt, dass für das Einführen des Trägers 301 ca. 0.03 s und das Zustellen des Schneidwerkzeuges 279 ca. 0.015 s benötigt werden und in dieser Zeit das Mantel-Band 272 um einen fünften Hub h5 vorgeschoben ist. Zu diesem Anfangszeitpunkt des Schneidvorganges hat der Mantelabschnitt 240 die gewünschte Länge 1.

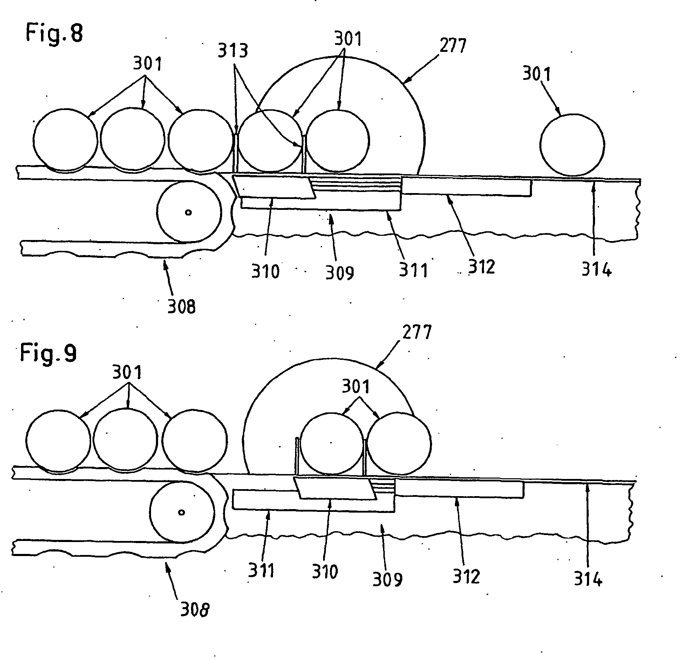

Der Trägerwechsel sollte vorzugsweise so gelöst werden, dass die dabei durchgeführten Massenbeschleunigungen möglichst klein sind. Daher sollten beim Trägerwechsel nur gerade zwei Träger 301 bewegt werden. Zudem ist es zweckmässig, wenn die Träger möglichst kleine Massen haben. Fig. 8 und 9 zeigen eine Ausführungsform der Zuführung von zylindrischen Träger 301 mit einer kontinuierlichen Fördereinrichtung 308, beispielsweise einem Förderband mit Aufnahmevertiefungen für die Träger 301, und einer daran anschliessenden Wechseleinrichtung 309.

Fig. 8 zeigt eine Situation direkt vor dem Trägerwechsel. Dabei ist in Achsrichtung zentral vor der Abtrennvorrichtung 277 ein beladener Träger 301 und links davon ein von der Fördereinrichtung 308 auf die Wechseleinrichtung 309 gebrachter leerer Träger 301. Die Wechseleinrichtung 309 umfasst einen Schlitten 310, der von einer Führung 311 geführt und von einer Antriebseinheit 312 betätigt wird. Damit der zuzuführende Träger 301 auf dem Schlitten 310 bei der Bewegung nach rechts mitgenommen wird, werden zumindest beidseits des zuzuführenden Trägers 301 Mitnehmer 313 in Mitnahmeposition gebracht.

Mit einer schnellen Bewegung werden der beladene und der zuzuführende Träger 301 so versetzt, dass der zuzuführende Träger auf der Achse des Mantel-Bandes 272 positioniert ist. Dieser leere Träger 301 wird somit beschleunigt und gebremst. Der beladene Träger 301 wird von den Mitnehmern 313 in der dargestellten Ausführungsform nur beschleunigt. Auf einer Weiterführung 314 kann der beladene Träger 301 später gebremst werden. Fig. 9 zeigt die Situation direkt am Ende des Trägerwechsels. Weil der Trägerwechsel sehr schnell durchgeführt wird, ist der nächste Träger 301 auf der kontinuierlichen Fördereinrichtung 308 nur unwesentlich nach rechts versetzt.

Während des Abtrennvorganges kann der Schlitten 310 mit eingezogenen Mitnehmern 313 von der Antriebseinheit 312 in die linke Ausgangsposition bewegt werden und der nächste Träger 306 wird kontinuierlich in die Position auf dem Schlitten bewegt. Am Anfang des Trägerwechsels liegt der nächste Träger 301, wie in Fig. 8 dargestellt, auf dem Schlitten 310 zwischen den aufgestellten Mitnehmern 313.

## Patentansprüche

1. Verfahren zum Herstellen von Mantelabschnitten (240) bei welchem Verfahren bandförmiges Flachmaterial (116) quer zur Bandachse kontinuierlich in eine geschlossene Form umgeformt wird, eine Längsverbindung durch das Schweissen einer Längsnaht (124) ausgebildet wird und nach dem Ausbilden der Längsverbindung Mantelabschnitte (240) vom Mantel-Band (272) abgetrennt werden, wobei zum Abtrennen eines Mantelabschnittes (240) eine Stützkante (278) und mindestens ein Schneidwerkzeug (279) eingesetzt werden, **dadurch gekennzeichnet, dass** die Stützkante (278) im Innern des kontinuierlich gebildeten Mantel-Bandes (272) liegt, im Wesentlichen kreisförmig geschlossen ist, in einer Normalebene zur Längsachse des Mantel-Bandes (272) verläuft und direkt an der Innenseite des Mantel-Bandes (272) anliegt, das mindestens eine Schneidwerkzeug (279) beim Schneiden in Schneidlage um das Mantel-Band (272) gedreht wird, wobei die Stützkante (278) beim Abtrennen von Mantelabschnitten (240) mit dem mindestens einen, entlang der Stützkante bewegten Schneidwerkzeug (279) zusammenwirkt, sich ein Schneidbereich einmal um die Längsachse dreht und dabei einen Mantelabschnitt (240) abtrennt, während des Schneidvorganges die Stützkante (278) und das mindestens eine Schneidwerkzeug (279) mit dem Mantel-Band (272) vorgeschoben werden und nach dem Schneidvorgang das mindestens eine Schneidwerkzeug (279) in eine kontaktfreie Lage zum Mantel-Band (272) gebracht und gegen die Bewegung des Mantel-Bandes (272) zurück zur Ausgangslage vor dem Schneidvorgang gebracht wird.

2. Verfahren nach Anspruch 1, **dadurch gekennzeichnet, dass** das bandförmige Flachmaterial zum Schweissen in eine flachgedrückte Form mit zwei Krümmungsbereichen (112c) gebracht wird und nach dem Schweissen das flachgedrückte Mantel-Band (272) von einem im Innern des Mantel-Bandes (272) angeordneten Aufweitungselement (273) in den kreisförmigen Querschnitt der Stützkante (278) umgeformt wird.

3. Verfahren nach Anspruch 2, **dadurch gekennzeichnet, dass** das Aufweitungselement (273) von einer Halterung (275) in einem Bereich gehalten wird, in dem das bandförmige Flachmaterial (116) noch nicht geschlossen ist, wobei das Aufweitungselement (273) an zwei Haltestangen (274) befestigt ist, die in den beiden Krümmungsbereichen (112c) des flachgedrückten Mantel-Bandes (272) geführt sind und sich vom Aufweitungselement (273) bis zur Halterung (275) erstrecken.

4. Verfahren nach Anspruch 2 oder 3, **dadurch gekennzeichnet, dass** die Bewegungen der Stützkante (278) von einer Führungsvorrichtung (273) geführt werden, wobei die Stützkante (278) über die Führungsvorrichtung (280) mit dem Aufweitungs-element (273) verbunden ist.

5. Verfahren nach einem der Ansprüche 1 bis 3, **dadurch gekennzeichnet, dass** die Stützkante von der offenen Seite des Mantel-Bandes (272) her entgegen der Vorschubrichtung des Mantel-Bandes (272) in den abzutrennenden Mantelabschnitt eingeführt wird.

6. Verfahren nach Anspruch 5, **dadurch gekennzeichnet, dass** nach dem Abtrennens eines Mantelabschnittes (240) der Mantelabschnitt (240) von der Stützkante (278) abgegeben wird und die Stützkante (278) zum Abtrennen eines weiteren Mantelabschnittes (240) in das in der Zwischenzeit bereits weiter vorgerückte Mantel-Band (272) eingeführt wird.

7. Verfahren nach Anspruch 5, **dadurch gekennzeichnet, dass** nach dem Abtrennen eines Mantelabschnittes (240) der Mantelabschnitt (240) an einem zylindrischen Träger (301) weiter geführt wird, wobei jeder Träger (301) eine erste Stirnseite (302) mit der Stützkante (278), eine zweite Stirnseite (303) mit einer Verbindungseinrichtung zum lösbaren Verbinden mit einem Kolbenteil (305) und dazwischen eine zylindrische Trägerfläche (304) umfasst.

8. Vorrichtung zum Herstellen von Mantelabschnitten (240) mit einer Umformivorrichtung, die bandförmiges Flachmaterial (116) quer zur Bandachse kontinuierlich in eine geschlossene Form umformt, einer Schweissvorrichtung, welche eine Längsnaht schweisst, und einer Abtrennvorrichtung (277), welche Mantelabschnitte (240) abtrennt, **dadurch gekennzeichnet, dass** im Innern des kontinuierlich gebildeten Mantel-Bandes (272) eine Stützkante (278) angeordnet ist, welche im Wesentlichen kreisförmig geschlossen ist, in einer Normalebene zur Längsachse des Mantel-Bandes (272) verläuft und direkt an der Innenseite des Mantel-Bandes (272) anliegt, mindestens ein Schneidwerkzeug (279) zum Schneiden in Schneidlage um das Mantel-Band (272) drehbar ist, so dass sich ein Schneidbereich einmal um die Längsachse dreht und dabei einen Abschnitt des Mantel-Bandes (272) abtrennt, wobei während des Schneidvorganges die Stützkante (278) mit dem mindestens einen, entlang der
Stützkante bewegten Schneidwerkzeug (279) zusammenwirkt, die Stützkante (278) und das mindestens eine Schneidwerkzeug (279) mit dem Mantel-Band (272) vorschiebbar ist und nach dem Schneidvorgang das mindestens eine Schneidwerkzeug (279) in eine kontaktfreie Lage und gegen die Bewegung des Mantel-Bandes (272) zurück zur Ausgangslage vor dem Schneidvorgang bewegbar ist.

9. Vorrichtung nach Anspruch 8, **dadurch gekennzeichnet, dass** die Umformvorrichtung das bandförmige Flachmaterial in eine flachgedrückte Form mit zwei Krümmungsbereichen (112c) umformt und ein Aufweitungselement (273) im Innern des Mantel-Bandes (272) angeordneten ist, welches nach dem Schweissen das flachgedrückte Mantel-Band (272) in den kreisförmigen Querschnitt der Stützkante (278) umformt.

10. Vorrichtung nach Anspruch 9, **dadurch gekennzeichnet, dass** das Aufweitungselement (273) von einer Halterung (275) in einem Bereich gehalten wird, in dem das bandförmige Flachmaterial (116) noch nicht geschlossen ist, wobei das Aufweitungselement (273) an zwei Haltestangen (274) befestigt ist, die in den beiden Krümmungsbereichen (112c) des flachgedrückten Mantel-Bandes (272) geführt sind und sich vom Aufweitungselement (273) bis zur Halterung (275) erstrecken.

11. Vorrichtung nach Anspruch 9 oder 10, **dadurch gekennzeichnet, dass** die Stützkante (278) über eine Führungsvorrichtung (280) mit dem Aufweitungselement (273) verbunden ist.

12. Vorrichtung nach Anspruch 8 oder 9, **dadurch gekennzeichnet, dass** ein Kolbenteil (305) die Stützkante (278) von der offenen Seite des Mantel-Bandes (272) her entgegen der Vorschubrichtung des Mantel-Bandes (272) in den abzutrennenden Mantelabschnitt einführbar macht.

13. Vorrichtung nach Anspruch 12, **dadurch gekennzeichnet, dass** die Stützkante (278) an einem zylindrischen Träger (301) ausgebildet ist, wobei jeder Träger (301) eine erste Stirnseite (302) mit der Stützkante (278), eine zweite Stirnseite (303) mit einer Verbindungseinrichtung zum lösbaren Verbinden mit einem Kolbenteil (305) und dazwischen eine zylindrische Trägerfläche (304) umfasst.

14. Vorrichtung nach Anspruch 13, **dadurch gekennzeichnet, dass** der Abtrennvorrichtung (277) eine Wechseleinrichtung (309) zugeordnet ist, welche einen in Achsrichtung zentral vor der Abtrennvorrichtung (277) liegenden Träger (301) und einen leerer Träger (301) so verschiebbar macht, dass nach der Verschiebung der leere Träger (301) in Achsrichtung zentral vor der Abtrennvorrichtung (277) liegt.

## Claims

1. A method for producing tubular segments (240), in which method strip-shaped sheet material (116) is continuously transformed transversely to the strip axis into a tubular shape, a longitudinal connection is formed by welding a longitudinal seam (124), and after forming the longitudinal connection tubular sections (240) are severed from the tubular strip (272), a support edge (278) and at least one cutting tool (279) being utilised for severing a tubular section (240), **characterised in that** said support edge (278) is situated within the interior of the tubular strip continuously formed, is substantially closed in an annular fashion, and extends in a plane perpendicular to the longitudinal axis of said tubular strip (272) and engages directly the inner side of said tubular strip (272), that the at least one cutting tool (279), during cutting, is rotated around the tubular strip (272) in a cutting position, wherein said support edge (278) for severing a tubular section (240) cooperates with the at least one cutting tool (279) moved along said support edge, and a cutting region rotates once about said longitudinal axis, thus severing said tubular section (240), while the support edge (278) and the at least one cutting tool (279) is advanced during cutting procedure together with the tubular strip (272), and after the cutting procedure the at least one cutting tool (279) is brought into a position free of contact with said tubular strip (272) and is brought back into the initial position prior to the cutting procedure in opposition to the movement of said tubular strip (272).

2. Method according to claim 1, **characterised in that** said strip-shaped sheet material, for welding, is brought into a flattened shape having two regions of curvature (112c), and after welding, the flattened tubular strip (272) is transformed into the annular cross-section of said support edge (278) by an enlarging element (273) located in the interior of said tubular strip (272).

3. Method according to claim 2, **characterised in that** said enlarging element (273) is held by a holding unit (275) in a region, where said strip-shaped sheet material (116) is not yet closed, the enlarging element (273) being attached to two holding rods (274) which are guided in the two regions of curvature (112c) of the flattened tubular strip (272) and extend from said enlarging element (273) up to said holding unit (275).

4. Method according to claim 2 or 3, **characterised in that** the movements of said support edge (278) are guided by guiding means (273), the support edge (278) being connected to said enlarging element (273) via said guiding means (273).

5. Method according to any of claims 1 to 3, **characterised in that** said support edge is introduced into the tubular section to be severed from the open side of the tubular strip (272) in opposition to the advancing direction of said tubular strip (272).

6. Method according to claim 5, **characterised in that** after severing a tubular section (240), the tubular section (240) is delivered from said support edge (278), and the support edge (278) is introduced into the tubular strip (272) advanced in the meantime for severing another tubular section (240).

7. Method according to claim 5, **characterised in that** after severing a tubular section (240), the tubular section (240) is further guided by a cylindrical carrier (301), each carrier (301) comprising a first front side (302) with the support edge (278), a second front side (303) with connection means for a releasable connection with a piston part (305) and a cylindrical carrier surface (304) in-between.

8. A device for producing tubular sections (240) comprising transforming means, which transforms strip-shaped sheet material (116) continuously transversely to the strip axis into a closed shape, welding means that welds a longitudinal seam, and severing means (277), which severs tubular sections (240), **characterised in that** a support edge 8278) is located in the interior of the tubular strip (272) continuously formed, which, in substance, is annularly closed, extends in a perpendicular plane to the longitudinal axis of said tubular strip (272) and engages directly the inner side of the tubular strip (272), that at least one cutting tool (279) is rotated about said tubular strip (272) for cutting in a cutting position, so that a cutting region rotates once about said longitudinal axis, thus severing one section of said tubular strip (272), wherein during the cutting procedure the support edge (278) cooperates with the at least one cutting tool (279) moved along said support edge, the support edge (278) and the at least one cutting tool being able to be advanced together with said tubular strip (272), and after the cutting procedure at least one cutting tool (279) being movable into a position free of contact and contrary to the movement of said tubular strip (272) back into the initial position prior to the cutting procedure.

9. Device according to claim 8, **characterised in that** said transforming means transforms the strip-shaped sheet material into a flattened shape having two regions of curvature (112c), and an enlarging element (273) is located in the interior of said tubular strip (272), which after welding the flattened tubular strip (272) transforms it into the annular cross-section of said support edge (278).

10. Device according to claim 9, **characterised in that** said enlarging element (273) is held by a holding unit (275) in a region, where said strip-shaped sheet material (116) is not yet closed, the enlarging element (273) being attached to two holding rods (274) which are guided in the two regions of curvature (112c) of the flattened tubular strip (272) and extend from said enlarging element (273) up to said holding unit (275).

11. Device according to claim 9 or 10, **characterised in that** said support edge (278) is connected to said enlarging element (273) via guiding means (273).

12. Device according to claim 8 or 9, **characterised in that** a piston part (305) enables said support edge (278) to be introduced into the tubular section to be severed from the open side of the tubular strip (272) in opposition to the advancing direction of said tubular strip (272).

13. Device according to claim 12, **characterised in that** said support edge (278) is formed on a cylindrical carrier (301), each carrier (301) comprising a first front side (302) with the support edge (278), a second front side (303) with connection means for a releasable connection with a piston part (305) and a cylindrical carrier surface (304) in-between.

14. Device according to claim 13, **characterised in that** replacement means (309) are associated to said severing means (277), which renders a carrier (301) situated centrally in axial direction before said severing means (277) and a devoid carrier (301) displaceable in such a manner, that after displacement the devoid carrier (301) is situated centrally in axial direction before said severing means (277).

## Revendications

1. Procédé pour produire des sections tubulaires (240), dans ledit procédé on transforme un matériau plat (116) en forme de bande transversalement à l'axe de bande dans une forme fermée, on forme une connexion longitudinale par soudage d'une soudure longitudinale (124), et après avoir formé la connexion longitudinale on découpe des sections tubulaires (240) de la bande tubulaire (272), dans lequel on utilise une arête de support (278) et au moins un outil de coupage (279) pour découper d'une section tubulaire (240), **caractérisé en ce, que** l'arête de support (278) est située à l'intérieur de la bande tubulaire (272) formée continuellement, est sensiblement fermée d'une forme annulaire et s'étend dans un plan perpendiculaire à l'axe longitudinal de la bande tubulaire (272) et contacte directement le côté intérieur de la bande tubulaire (272), que l'au moins un outil de coupage (279), lors de la coupure, est tourné autour de la bande tubulaire (272) dans une position de coupure, l'arête de support (278) lors du découpage des sections tubulaires (240) coopérant avec l'au moins un outil de coupage (279), où une zone de coupage tourne une fois autour de l'axe longitudinal en découpant une section tubulaire (240), tandis que l'arête de support (278) et l'au moins un outil de coupage (279), pendant le processus de coupage, sont avance conjointement avec la bande tubulaire, et après le processus de coupage l'au moins un outil de coupage (279) est amené dans une position sans contacte avec la bande tubulaire (272) et est ramené dans la position initiale avant du processus de coupage contre le mouvement de la bande tubulaire (272).

2. Procédé selon la revendication 1, **caractérisé en ce, que** le matériau plat en forme de bande pour le soudage est amené dans une forme raplatie ayant deux zones de courbures (112c), est après le soudage la bande tubulaire (272) raplatie est transformée à la coupe transversale annulaire de l'arête de support (278) par un élément d'élargissement (273) disposé à l'intérieur de la bande tubulaire (272).

3. Procédé selon la revendication 2, **caractérisé en ce, que** l'élément d'élargissement (273) est maintenu par un support (275) dans une zone, où le matériau plat en forme de bande (166) n'est pas encore fermé, l'élément d'élargissement (273) étant fixé à deux barres de retenu (274), qui sont guidées dans les deux zones de courbures (112c) de la bande tubulaire (272) raplatie est s'étendent de l'élément d'élargissement (273) jusqu'au support (275).

4. Procédé selon la revendication 2 ou 3, **caractérisé en ce, que** les mouvements de l'arête de support (278) sont guidés par un dispositif de guidage (273), l'arête de support (278) étant reliée à l'élément d'élargissement (273) par le dispositif de guidage (273).

5. Procédé selon une quelconque des revendications 1 à 3, **caractérisé en ce, que** l'arête de support est introduite à partir du côté ouvert de la bande tubulaire (272) dans la section tubulaire à découper contre la direction d'avance de la bande tubulaire (272).

6. Procédé selon la revendication 5, **caractérisé en ce, qu'**après la découpure d'une section tubulaire (240), la section tubulaire (240) est dégager de l'arête de support (278), et l'arête de support (278) est introduite dans la bande tubulaire (272) déjà avancée dans l'entre-temps pour découper une autre section tubulaire (240).

7. Procédé selon la revendication 5, **caractérisé en ce, qu'**après la découpure d'une section tubulaire (240), la section tubulaire (240) est avancée sur un porteur cylindrique (301), chaque porteur (301) comprenant un premier côté frontal (302) avec l'arête de support (278), un deuxième côté frontal (303) avec un dispositif de connexion pour relier d'une façon détachable avec une partie de piston (305) et une surface support cylindrique entre les deux.

8. Dispositif pour produire des sections tubulaires (240), comprenant un dispositif de transformation, qui transforme continuellement un matériau plat (116) en forme de bande transversalement à l'axe de bande dans une forme fermée, un dispositif de soudage, qui soude une soudure longitudinale, et un dispositif de découpage (277), qui découpe des sections tubulaires (240), **caractérisé en ce, qu'**une arête de support (278) est disposée à l'intérieur de la bande tubulaire (272) formée continuellement, qui est sensiblement formée d'une façon annulaire, s'étend dans un plan perpendiculaire à l'axe longitudinal de la bande tubulaire (272) et contacte directement le côté intérieur de la bande tubulaire (272), qu'au moins un outil de coupage (279) peut être tourné autour de la bande tubulaire (272) pour couper dans une position de coupure, de manière, qu'une zone de coupure tourne une fois autour l'axe longitudinale, tout en découpant une section de la bande tubulaire (272), l'arête de support (278), lors du processus de coupage, coopérant avec l'au moins un outil de coupage (279), qui est mû le long de l'arête de support, l'arête de support (278) et l'au moins un outil de coupage (279) étant capable d'avancer avec la bande tubulaire (272), et l'au moins un outil de coupage (279) étant capable d'être mû après le processus de coupage dans une position sans contacte dans la position initiale avant du processus de coupage contre le mouvement de la bande tubulaire (272).

9. Dispositif selon la revendication 8, **caractérisé en ce, que** le dispositif de transformation transforme le matériau plat en forme de bande dans une forme raplatie ayant deux zones de courbures (112c), et un élément d'élargissement (273) est disposé à l'intérieur de la bande tubulaire (272), qui transforme la bande tubulaire (272) raplatie après le soudage à la coupe transversale annulaire de l'arête de support (278).

10. Dispositif selon la revendication 9, **caractérisé en ce, que** l'élément d'élargissement (273) est maintenu par un support (275) dans une zone, où le matériau plat en forme de bande (166) n'est pas encore fermé, l'élément d'élargissement (273) étant fixé à deux barres de retenu (274), qui sont guidées dans les deux zones de courbures (112c) de la bande tubulaire (272) raplatie est s'étendent de l'élément d'élargissement (273) jusqu'au support (275).

11. Dispositif selon la revendication 9 ou 10, **caractérisé en ce, que** l'arête de support (278) est reliée à l'élément d'élargissement (273) par un dispositif de guidage (273).

12. Dispositif selon la revendication 8 ou 9, **caractérisé en ce, qu'**une une partie de piston (305) facilite l'introduction de l'arête de support (278) à partir du côté ouvert de la bande tubulaire (272) dans la section tubulaire à découper contre la direction d'avance de la bande tubulaire (272).

13. Dispositif selon la revendication 12, **caractérisé en ce, que** l'arête de support (278) est formée sur un porteur cylindrique (301), chaque porteur (301) comprenant un premier côté frontal (302) avec l'arête de support (278), un deuxième côté frontal (303) avec un dispositif de connexion pour relier d'une façon détachable avec une partie de piston (305) et une surface support cylindrique entre les deux.

14. Dispositif selon la revendication 13, **caractérisé en ce, qu'**un dispositif de remplacement est associé au dispositif de découpage (277), qui rend un porteur (301), situé centralement en direction d'axe devant le dispositif de découpage (277), et un porteur (301) vide déplaçable de manière, que le porteur (301) vide, après le déplacement, est situé centralement en direction d'axe devant le dispositif de découpage (277).
